Europäisches Patentamt

European Patent Office

Office européen des brevets

(19)

(11) Numéro de publication : **0 364 315 B1**

(12) **FASCICULE DE BREVET EUROPEEN**

(45) Date de publication du fascicule du brevet :
**14.04.93 Bulletin 93/15**

(51) Int. Cl.[5] : **G01N 27/12**

(21) Numéro de dépôt : **89402484.3**

(22) Date de dépôt : **12.09.89**

(54) **Capteur de type résistif, de mesure de concentrations relatives d'espèces réactives fluides, compensé en température.**

(30) Priorité : **16.09.88 FR 8812127**

(43) Date de publication de la demande :
**18.04.90 Bulletin 90/16**

(45) Mention de la délivrance du brevet :
**14.04.93 Bulletin 93/15**

(84) Etats contractants désignés :
**DE ES GB IT NL SE**

(56) Documents cités :
**DE-A- 2 908 916
FR-A- 2 393 302
US-A- 4 007 435
US-A- 4 453 397**

(73) Titulaire : **THOMSON-CSF
51, Esplanade du Général de Gaulle
F-92800 Puteaux (FR)**

(72) Inventeur : **Pribat, Didier
THOMSON-CSF SCPI Cédex 67
F-92045 Paris la Défense (FR)**
Inventeur : **Perret, Joel
THOMSON-CSF SCPI Cédex 67
F-92045 Paris la Défense (FR)**
Inventeur : **Rouffy, Jean-Claude
THOMSON-CSF SCPI Cédex 67
F-92045 Paris la Défense (FR)**

(74) Mandataire : **Grynwald, Albert et al
THOMSON-CSF, SCPI, B.P. 329, 50, rue
Jean-Pierre Timbaud
F-92402 Courbevoie Cédex (FR)**

## Description

L'invention concerne un capteur d'oxygène de type résistif, de mesure de concentrations relatives d'espèces réactives fluides, compensé en température.

Elle se rapporte notamment à un dispositif capable de produire un signal pour le contrôle en boucle fermée d'un mélange air/carburant tel que ceux alimentant des machines de combustion du type moteurs à combustion interne ou chaudières et particulièrement chaudières à circulation d'air forcée.

Dans les moteurs à combustion interne de type récent, particulièrement dans les moteurs automobiles à allumage commandé, on observe une tendance marquée au contrôle précis de la carburation, de façon à augmenter l'efficacité et le rendement, d'une part, et de façon à réduire les émissions polluantes à l'échappement, d'autre part. Dans de nombreux cas on désire alimenter le moteur avec un mélange air/carburant stoechiométrique et il existe déjà dans la pratique des systèmes de régulation qui maintiennent ce mélange à la stoechiométrie en utilisant un capteur d'oxygène placé dans le pot d'échappement. Ce capteur délivre un signal représentatif de l'état du mélange fourni aux cylindres en indiquant si le mélange en question est riche ou pauvre.

Ainsi, la plupart des capteurs d'oxygène existant déjà délivrent un signal de l'ordre du volt lorsque le mélange est riche et un signal de l'ordre de 50-100 mV lorsque le mélange est pauvre. Le système électronique de régulation de la carburation fonctionne donc en comparant la valeur du signal de sortie délivré par le capteur, avec une référence de tension qui est en général située autour de 500 mV. Dans ces conditions, si la tension de sortie du capteur est supérieure à 500 mV, ce qui correspond à une situation où un mélange riche alimente les cylindres, l'électronique de régulation et d'asservissement du moteur corrige les paramètres d'injection de carburant de façon à augmenter le rapport air/essence et lorsque la tension de sortie du capteur est inférieure à 500 mV l'électronique diminue le rapport air/essence, de telle sorte que globalement le mélange soit toujours exactement stoechiométrique.

En pratique, pour les véhicules équipé de pots catalytiques trifonctionnels, la régulation de la carburation à l'aide d'une sonde à oxygène est nécessaire. En effet, les réglages mécaniques conventionnels ne permettent pas de maintenir le mélange dans une fenêtre de composition suffisamment étroite pour être compatible avec un bon rendement du pot catalytique en question.

Deux types distincts de capteurs d'oxygène sont actuellement fabriqués ou étudiés dans le monde, les capteurs galvaniques et les capteurs résistifs.

Les capteurs galvaniques (les plus répandus) fonctionnent sur le principe de la pile de concentration. Un doigt de gant en zircone stabilisée a sa surface externe en contact avec les gaz d'échappements, tandis que sa surface interne est en contact avec un mélange oxygéné de référence qui est en général l'air. Les surfaces internes et externes sont munies d'électrodes de platine par exemple, qui permettent d'une part de mesurer le potentiel électrochimique et qui pour la surface externe permet de catalyser la fin de la combustion du mélange d'échappement gazeux.

On trouvera différentes descriptions de ce type de capteur dans la littérature (H. DUEKER, K.H. FRIESE, W.D. HAECKER. Society of Automotive Engineers 1975, paper 750223 ; H. Y. GRUBER, H. M. WIEDENMANN Society of Automotive Engineers 1980, paper 800017 ; E.M. LOGOTHETIS, in Advances in Ceramics, edited by A.M. HEUR and L.W. HOBBS, vol 3, Science and Technology of Zirconia (American Ceramic Society, Colombus OH, 1981) p.388 etc).

Les capteurs résistifs fonctionnent selon un principe différent, en ce sens qu'ils exploitent les propriétés de variation de résistivité de certains oxydes des métaux de transition en fonction de la pression partielle d'oxygène environnante. Certaines des variétés allotropiques des oxydes de métaux de transition (par exemple : Ti, Nb, Ce...) présentent en effet une résistivité de la forme :

$$\rho = \rho o \, Po_2^\alpha \, \exp W/kT \quad (1),$$

où :

$\rho o$ est une constante

-$\rho o_2$ est la pression partielle d'oxygène environnante et

- k la constante de Boltzmann
- T la température absolue en Kelvins
- W une énergie reliée à la création d'un défaut ponctuel dans le réseau cristallin de l'oxyde considéré (par exemple lacune d'oxygène ou cation interstitiel)
- $\alpha$ une constante (1/4 ou 1/6 selon les cas) qui est aussi liée à l'équilibre des défauts dans le réseau cristallin de l'oxyde considéré.

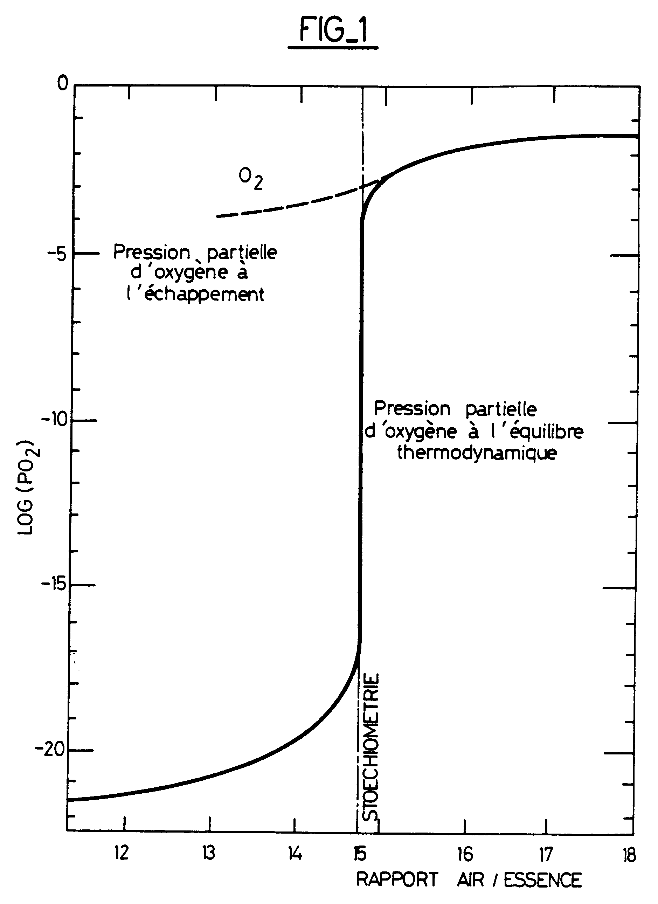

On voit ainsi, que si la pression partielle d'oxygène dans un mélange d'échappement est amenée à sa valeur d'équilibre thermodynamique (voir figure 1), une résistance façonnée dans la variété rutile de l'oxyde de titane par exemple ($\alpha_{TiO2} = 1/4$) exhibera une variation de pratiquement 4 ordres de grandeur lorsque le mélange air/carburant alimentant les cylindres passera par la stoechiométrie.

C'est donc cette propriété que l'on va chercher à exploiter dans l'utilisation des capteurs d'oxygène de type résistifs à des fins de contrôle d'un mélange air/carburant à la stoechiométrie.

Les capteurs d'oxygène à base d'oxyde de titane (variété rutile) sont connus depuis une douzaine d'années (T. Y. TIEN, H.L. STANDLER, E.F. GIBBONS, P.J. ZACMANDIS Ceramic Bull, 54, 280, 1975 ; E.M. LOGOTHETIS, Ceramic Eng. and Sci. Proc., 8th Automotive Mat Conf, 281, 1980 ; M.J. ESPER, E.M. LOGOTHETIS, J.C. CHU Society of Automotive Engineers 1979, paper 790140 ; K. SAJI, H. TAKAHASHI, H.KONDO, T.TAKEUCHI, I. IGARASHI, Proc. of the International Meeting on Cheminal Sensors, Edited ty T. SEIYAMA et Coll, Elsevier 1983 p.171 ; etc..).

Ces capteurs se présentent sous forme de disques de $TiO_2$, dans lesquels ont été noyés des fils de contact en platine, permettant la mesure de la valeur de la résistance du disque en question en fonction de la pression partielle d'oxygène. L'inconvénient présenté par ces dispositifs provient des variations de température des gaz d'échappement entre 300 et 900 °C selon le régime moteur. En effet, si l'on se reporte à la formule (1) donnant la résistivité de l'oxyde de titane par exemple, on constate qu'une variation de température de 300 à 900°C produit aussi une variation de résistivité d'à peu près 4 ordres de grandeurs.

Il faut donc introduire une certaine forme de compensation de température afin de pouvoir établir une discrimination claire entre les variations de résistivité dues à la variation de pression partielle d'oxygène et les variations de résistivité dues à la variation de température.

Récemment, on a vu apparaître des capteurs de "type avancé", qui utilisent les techniques de la microélectronique, et particulièrement les techniques de la sérigraphie pour réaliser les éléments sensibles en oxyde de titane. (W. J. KAISER, E.M. LOGOTHETIS, Society of Automotive Engineers 1983, paper 830167 ; H. KONDO, H. TAKAKASHI, T. TAKEUCHI, I. IGARASHI, Proc.of the 3rd Sensor Symposium 1983, p. 185 ; D. S. HOWART, A. L. MICHELI, Society of Automotive Engineers, 1984, paper 840140 ; J.L. PFEIFER, T.A. LIBSCH, H.P. WERTHERMER, Society of Automotive Engineers 1985, paper 850381 ; A.TAKAMI, T.MATSUURA, T.SEKIYA, T. OKAWA, Y. WATANABE Society of Automotive Engineers, 1985, paper 850381).

Les capteurs ainsi décrits sont réalisés à partir d'encres ou pates comprenant l'oxyde désiré ($TiO_2$, $CeO_2$, $Nb_2 O_3$ etc...) sous forme d'une suspension dans un milieu organique apte à une mise en forme de type sérigraphie. Cette encre est ensuite déposée sur un substrat bon isolant électrique et inerte chimiquement, type alumine, selon une géométrie déterminée et elle subit les traitements thermiques appropriés permettant de donner au dépôt les caractéristiques voulues, en particulier au niveau de la porosité.

Le choix du point de fonctionnement en température est cependant effectué à l'aide d'une résistance de chauffage disposée sur la face arrière du substrat d'alumine et permettant de maintenir l'élément sensible dans une gamme de température relativement peu étendue (de l'ordre de 100°C) quelle que soit la température des gaz d'échappement.

L'invention se rapporte à un capteur de type avancé, qui intègre sur un même substrat céramique, isolant électriquement et chimiquement inerte :

- (i) un élément sensible à la pression partielle d'oxygène ;
- (ii) une thermistance de compensation de température ;
- (iii) éventuellement une résistance, permettant d'ajuster la valeur de la thermistance ;
- (iv) une résistance de chauffage ;
- (v) des moyens de connectique.

On connaît un type de capteur ainsi conçu tel que celui décrit dans le document US-A-4 453 397 cependant dans ce type de capteur on peut penser que la résistivité de la thermistance de compensation peut être influencée par le gaz à analyser.

L'invention concerne donc un capteur de type résistif de mesure de concentrations relatives d'espèces réactives fluides, comportant réalisés en couches minces ou en couches épaisses, sur un substrat 1 :

- au moins un élément sensible dont la résistivité est sensible à un excès de l'une des espèces réactives par rapport à une stoechiométrie déterminée ;
- au moins une thermistance montée en pont diviseur de tension avec la résistance formée par l'élément sensible et réalisant une compensation en température pour le capteur caractérisé en ce que la structure de l'élément sensible est poreuse tandis que celle de la thermistance est dense.

De plus, l'invention présente un certain nombre de structures particulières de capteurs qui sur le plan de la fabrication sont avantageuses.

Les différents objets et caractéristiques de l'invention apparaîtront de façon plus détaillée dans la description qui va suivre faite à titre d'exemple en se reportant aux figures annexées qui représentent :

- la figure 1, une courbe représentant l'équilibre thermodynamique d'un mélange air/essence ;
- la figure 2, un schéma électrique d'un pont diviseur de compensation de température ;
- la figure 3, une courbe de réponse d'un capteur de type résistif compensé en température selon l'invention ;
- la figure 4, un exemple de réalisation détaillée en vue éclatée d'un capteur selon l'invention ;
- la figure 5, une vue en perspective du capteur de l'invention, comportant des moyens de fixation et des moyens de connexion électrique ;
- la figure 6, un exemple de montage du capteur de l'invention ;
- la figure 7, une vue éclatée d'un exemple de réalisation du capteur selon l'invention ;
- la figure 8, une vue en coupe d'un exemple de réalisation du capteur selon l'invention ;
- la figure 9, une variante de réalisation du capteur selon l'invention ;
- les figures 10 et 11, d'autres variantes de réalisation du capteur selon l'invention ;
- les figures 12 et 13, un exemple de réalisation collective sur une même plaque de plusieurs cellules selon l'invention.

En utilisant un montage du type pont diviseur avec une thermistance disposée en série avec l'élément sensible, on arrive à éliminer les effets de température.

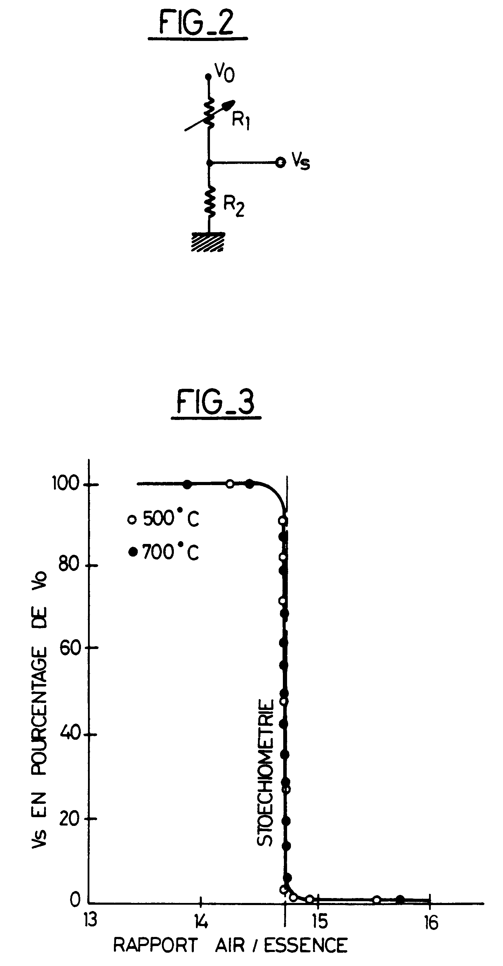

La figure 2, représente ce type de pont diviseur. Sur ce schéma, la résistance $R_1$, en oxyde de titane par exemple, possède une structure suffisamment poreuse pour être sensible aux variations de pression d'oxygène et constitue l'élément sensible du dispositif.

La résistance $R_2$ constituant la résistance de compensation en température, aussi élaborée à partie d'oxyde de titane possède une structure très dense, qui a pour effet de la rendre pratiquement insensible aux variations de pression-d'oxygène ; ses différentes surfaces peuvent de plus être passivées ce qui rend cette résistance de compensation totalement indépendante des variations de pression d'oxygène. Dans ces conditions, la tension Vs s'écrit :
$V_S = V_o R_2 / (R_1 + R_2)$, ou $V_o$ est une tension fixe choisie par l'utilisateur. La résistance $R_2$ dont on a dit qu'elle était rendue insensible aux variations de pression d'oxygène, s'écrit sous la forme :
$R_2 = K_2 \exp W/kT$

où : $K_2$ est une constante faisant intervenir des paramètres géométriques ainsi qu'une pression d'oxygène fixe.

D'autre part, $R_1$ s'écrit sous la forme :
$$R_1 = K_1 Po_2 \exp W/kT$$
où : $K_1$ est une constante géométrique
et : $Po_2$ la pression d'oxygène environnante.

La tension $V_S$ s'écrit alors :
$$V_S = V_o K_2 / (K_1 Po_2 + K_2)$$
et l'on voit qu'elle devient indépendante de la température. Si la pression partielle d'oxygène à l'échappement est faible (inférieure à $10^{-18}$ Atmosphère, correspondant à un mélange riche illustré sur la figure 1) on a $K_1 Po_2 \ll K_2$ et $V_S \simeq V_o$. Si par contre le mélange est pauvre, $Po_2$ à l'échappement sera de l'ordre de $10^{-2}$ Atmosphère et si l'on choisit correctement $K_1$ et $K_2$, $V_S$ peut atteindre une valeur équivalente à une faible fraction de $V_o$. La réponse d'un tel dispositif compensé en température est donnée à la figure 3. Sur le plan pratique, on place deux disques de $TiO_2$ en série, fabriqués à partir de poudres d'oxydes de granulométries différentes et comportant des connexions de platine. La structure de l'élément sensible est extrêmement poreuse tandis que celle de la thermistance est très dense. De plus, pour différencier plus encore la sensibilité à l'oxygène, l'élément sensible peut être imprégné à l'aide d'une solution d'acide chloroplatinique, le platine restant après traitement thermique sous forme extrêmement divisée et ayant pour effet d'accélérer la mise à l'équilibre de cet élément sensible (effet de catalyse).

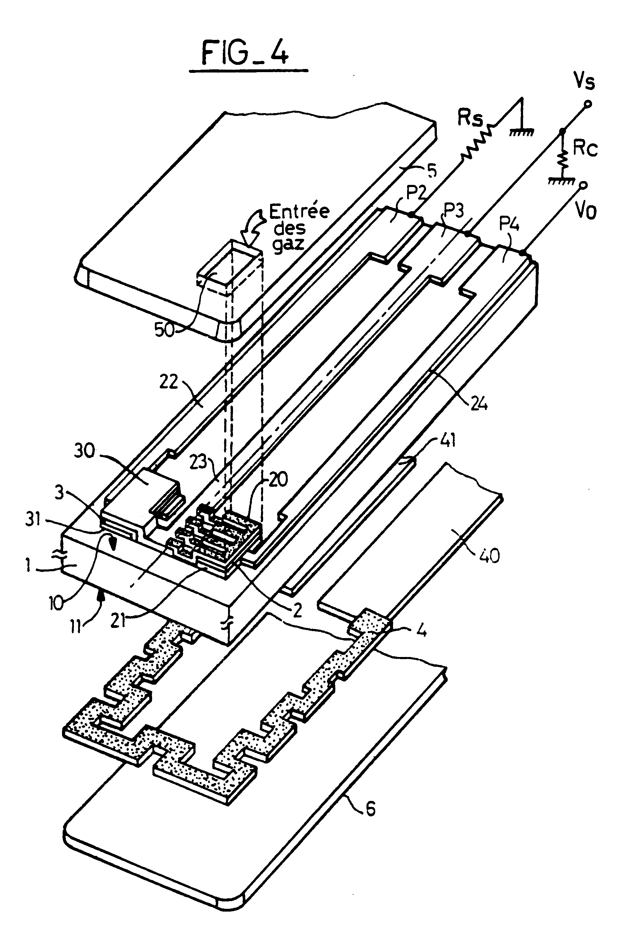

La figure 4, représente un schéma de capteur selon l'invention.

Les différents matériaux sont déposés en couches minces (par les méthodes bien connues de dépôt sous vide) ou en couches épaisses (par sérigraphie).

Le capteur de la figure 4 comporte, sur la face 10 d'un substrat inerte chimiquement, un élément 2 sensible à la teneur en oxygène d'un gaz qu'il reçoit. Cet élément sensible 2 est encadré par deux électrodes 20 et 21, l'une d'elle (l'électrode 20 sur la figure 4) permettant aux gaz à analyser d'accéder jusqu'à l'élément sensible 2. Ces électrodes 20 et 21 sont connectées par des pistes de connexion 23, 24, l'une à un potentiel d'entrée $V_o$, l'autre, à une résistance Rc et à une sortie de signal et fournit sur cette sortie un signal de potentiel $V_S$ vers des circuits utilisateurs non représentés.

A proximité de l'élément sensible 2 est placée une thermistance 3 qui est connectée par des électrodes 30 et 31, d'une part, a la piste de connexion 23 et, d'autre part, a la piste de connexion 22 vers une résistance $R_S$ et la terre.

La thermistance 3 est en un matériau tel que lors d'une variation de température sa variation de résistance est sensiblement équivalente à celle de l'élément sensible 2.

De préférence, la thermistance 3 est en un même matériau que l'élément sensible 2.

L'ensemble de la face 10 du substrat et des dispositifs qu'elle supporte, comme cela vient d'être décrit, est recouvert par une couche 5 d'encapsulation (en émail par exemple) étanche aux gaz à analyser mettant ainsi à l'abri de l'influence des gaz notamment la thermistance 3. Cette couche d'encapsulation est par exemple déposée par sérigraphie. Une ouverture 50 prévue dans la couche 5 permet l'accès des gaz vers l'élément sensible 2.

La face 11 du substrat 1 opposée à la face 10 possède une résistance de chauffage 4 connectable par des pistes de connexion 40 et 41 à des circuits d'alimentation électrique non représentés. Cette résistance 4 permet de porter à une température minimale de fonctionnement l'élément sensible 2. La face 11 et la résistance 4 sont recouvertes par une couche d'encapsulation 6, en émail par exemple.

On voit donc que l'élément sensible 2 (en variété rutile de l'oxyde de titane, par exemple) est placé en série avec la thermistance 3.

Cette dernière est fabriquée dans le même matériau que l'élément sensible 2. Les résistances Rc et $R_S$ permettent d'ajuster la dynamique de variation de $V_S$ en pourcentage de $V_o$, c'est à dire d'obtenir, par exemple $V_S \simeq 0,99 V_o$ lorsque le mélange est riche, et $V_S \simeq 0,01 V_o$ lorsque le mélange est pauvre. Ces résistances, sous forme de matériau sérigraphiables, peuvent être intégrées au substrat dans la partie de ce dernier supportant la connectique.

La thermistance 3 est recouverte d'une couche d'encapsulation qui ainsi, l'isole de l'atmosphère extérieure.

Ainsi, son matériau constitutif peut posséder la même granulométrie du départ, subir les mêmes traitements thermiques et posséder finalement la même microstruture finale que l'élément sensible 2, qui lui, est en contact direct avec les gaz d'échappement, grâce à la fenêtre 50 aménagée à cet effet dans l'émail d'encapsulation 5.

L'élément sensible 2 peut être réalisé à partir d'oxyde de titane $TiO_2$ par exemple. Sa structure est poreuse de façon a permettre une diffusion facile des gaz d'échappement. Son épaisseur est faible pour la même raison. Cet élément est compris entre une électrode inférieure 21 en métal noble (platine par exemple) et une électrode supérieure 20 en forme de peigne qui peut être constituée soit de platine, soit d'un cermet à base de platine ($Pt/Al_2O_3$, $Pt/MgAl_2O_4$, $Pt/ZrO_2$) ; la forme en peigne de cette électrode supérieure 20 permet un accès direct des gaz à la surface de l'élément sensible 2. De plus, le fait de la fabriquer en cermet permet de la rendre poreuse, et d'une porosité qui n'évoluera plus au cours d'une utilisation à haute température, l'ossature céramique inhibant le frittage ultérieur du métal. Les pistes de connexions conductrices 22, 23, 24 peuvent être en métal du même type que les électrodes (Pt par exemple) ou bien en un métal différent raccordé auxdites électrodes.

La thermistance 3 est réalisée de préférence en un même matériau que l'élément sensible 2. Selon l'exemple précédent la thermistance est donc également réalisée en oxyde de titane.

Le substrat 1 est constitué d'un matériau inerte chimiquement et bon isolant électrique (tel que de l'alumine, de l'oxyde de beryllium, du spinelle etc...).

La résistance 4 déposée sur la face arrière 11 peut être soit métallique, soit en cermet, selon la résistivité que l'on désire obtenir. Elle est encapsulée à l'aide d'un émail 6 de même type que celui utilisé pour l'émail 5 de la face supérieure 10. En ce qui concerne cette face supérieure 10, l'émail est un émail dévitrifiant, de façon à ce que la définition de la fenêtre 50 de prise d'essai de gaz ne soit pas affectée par une exposition à une température de fonctionnement de l'ordre de la température de traitement thermique de ce dernier (environ 900°C).

Les pistes de connexion 22, 23, 24, 40, 41 se terminent par des plages de connexion sur lesquels un connecteur vient s'enficher (face avant et face arrière), l'émail de passivation des couches 5 et 6 ne recouvrant évidemment pas cette partie du substrat.

Selon la vue éclatée de la figure 4, l'exemple de capteur de l'invention comporte une zone de détection dans laquelle est prévue l'élément sensible, une zone intermédiaire (ou zone de fixation) comportant uniquement les fils de connexions (22, 23, 24, 40, 41), et une zone de connexion possédant des plages de connexion P2, P3, P4 sur la face 10 et $P_5$ et $P_6$ sur la face 11.

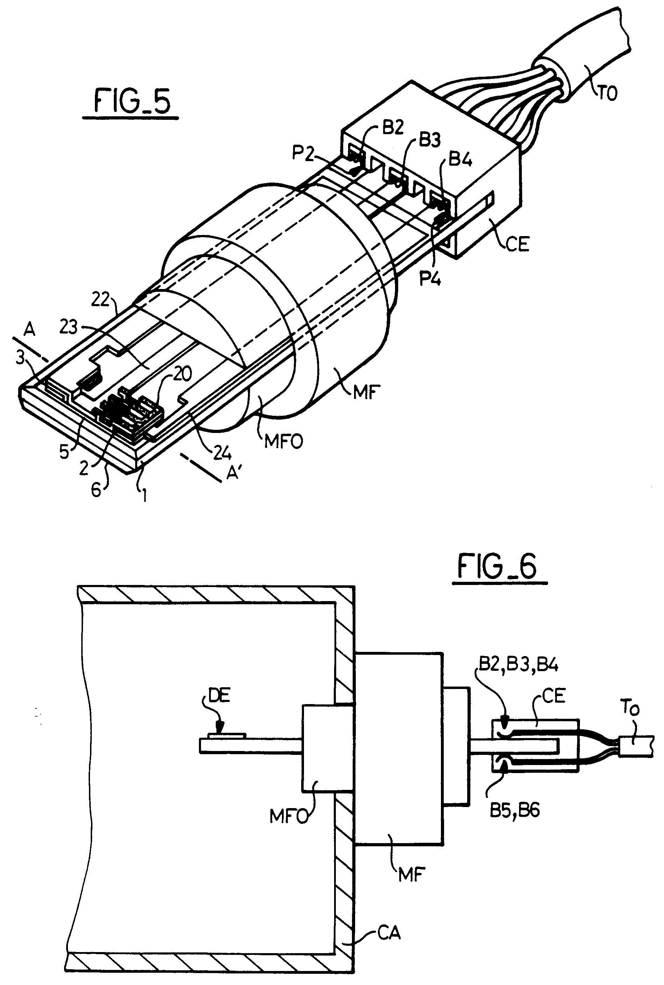

En se reportant à la figure 5, on va maintenant décrire un exemple de réalisation plus complet du capteur selon l'invention. Sur cette figure, on retrouve le capteur de la figure 4.

Dans la partie intermédiaire, appelée zone de fixation, située entre la zone de détection et la zone de connexion est située une pièce de fixation MF. Cette pièce de fixation est fixée de façon rigide et étanche aux couches d'encapsulation 5, 6 du capteur. La pièce MF peut posséder une partie rétrécie MFO, et éventuellement filetée, permettant le montage du capteur dans la paroi d'un carter.

Ainsi comme représenté en figure 6, la partie MFO de la pièces de fixation MF est montée dans un carter CA, la cellule comportant l'élément sensible 2 réalisée à l'extrémité gauche du capteur est située à l'intérieur du carter CA dans lequel se trouve le mélange gazeux à analyser ou à réguler. Le connecteur CE est ainsi isolé du mélange gazeux par la pièce de fixation MF et le carter CA.

Comme cela est représenté sur les figures 5 et 6, un connecteur CE est embroché sur le substrat 1 dans la zone de connexion. Des éléments de connexion (B2, B3, B4 par exemple) sont connectés aux plages de connexion (P2, P3, P4) et permettent la connexion des éléments du capteur à un câble TO vers des circuits extérieurs sortant du cadre de l'invention.

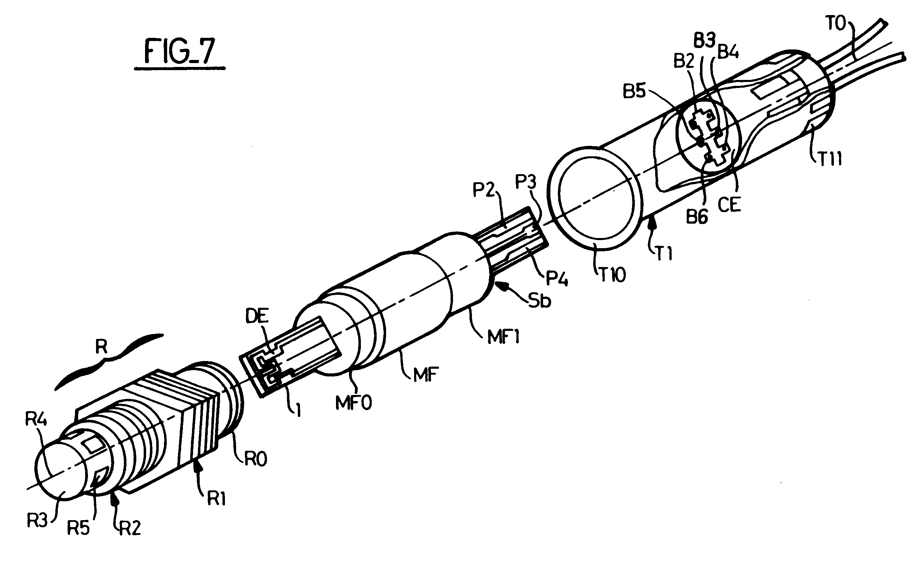

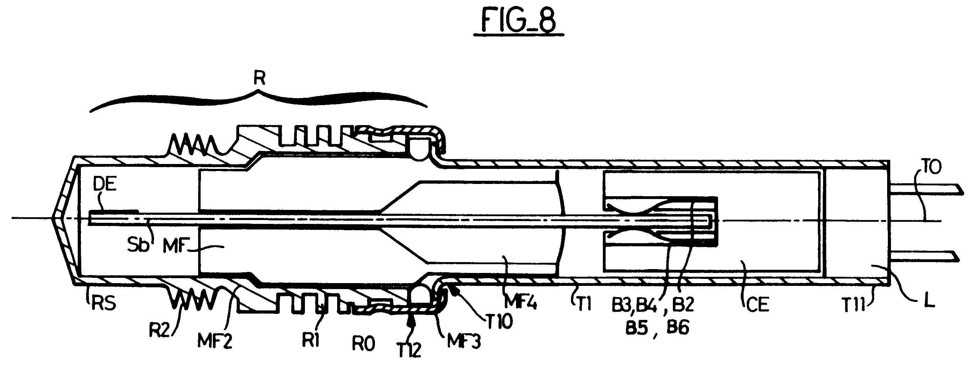

En se reportant aux figures 7 et 8, on va décrire un exemple de réalisation détaillée d'un capteur selon l'invention.

Sur la figure 7, on retrouve :
- la plaquette de substrat 1 portant notamment la cellule sensible 2, les plages de connexions P2, P3, P4 ;
- la pièce de fixation MF comprenant des parties de fixation MFO et MF1 ;
- le connecteur CE, avec les broches de connexion B2, B3, B4, B5, B6 et le câble TO.

Le capteur comporte en supplément une pièce de montage métallique R du capteur dans un carter (non représenté). Cette pièce de montage permet de monter le capteur dans un carter au lieu d'effectuer directement le montage de la pièce MF comme cela est représenté en figure 6.

La pièce de montage R est creuse de façon à recevoir la plaquette 1 et l'élément sensible 2 (ainsi que la thermistance 3). Elle comporte :
- une partie RO permettant d'emboîter la partie MFO de la pièce de fixation MF ;
- des ailettes de refroidissement R1 ;
- une partie filetée R2 permettant le montage de la pièce R dans une partie filetée du carter ;
- un capot de protection R3 protégeant la cellule sensible 2 située à l'intérieur et possédant des ouvertures R4, R5 pour la circulation du gaz à analyser.

Par ailleurs, un boîtier T1 est emboîté, par une extrémité T10 sur la partie MF1 de la pièce de fixation MF. Le connecteur CE est monté et fixé à l'autre extrémité T11 et à l'intérieur du boîtier T1 de telle façon que les broches B2, B3, B4 ainsi que B5 et B6 soient connectées aux plages de connexion telles que P2, P3, P4, P5 et P6 du capteur.

L'ensemble ainsi décrit est monté comme cela est représenté en coupe par la figure 8. De plus, le montage est rendu étanche de façon à ce que les gaz d'échappement n'atteignent pas la zone de connexion du capteur. Pour cela, la plaquette du capteur est scellée dans la pièce de fixation MF à l'aide d'un ciment réfractaire MF4. Des joints d'étanchéïté MF2, MF3 assurent l'étanchéïté entre la pièce de fixation MF et la pièce de montage R d'une part, et, la pièce de montage R et le boîtier T1 d'autre part.

Le boîtier T1 est serti dans sa partie T10 par une bague T12 et dans sa partie T11 respectivement sur la pièce de montage R et sur une bague en matière plastique de type viton V assurant le passage des brins composant le câble To. Ce dernier sertissage permet de rendre étanche la partie supérieure de l'ensemble du capteur.

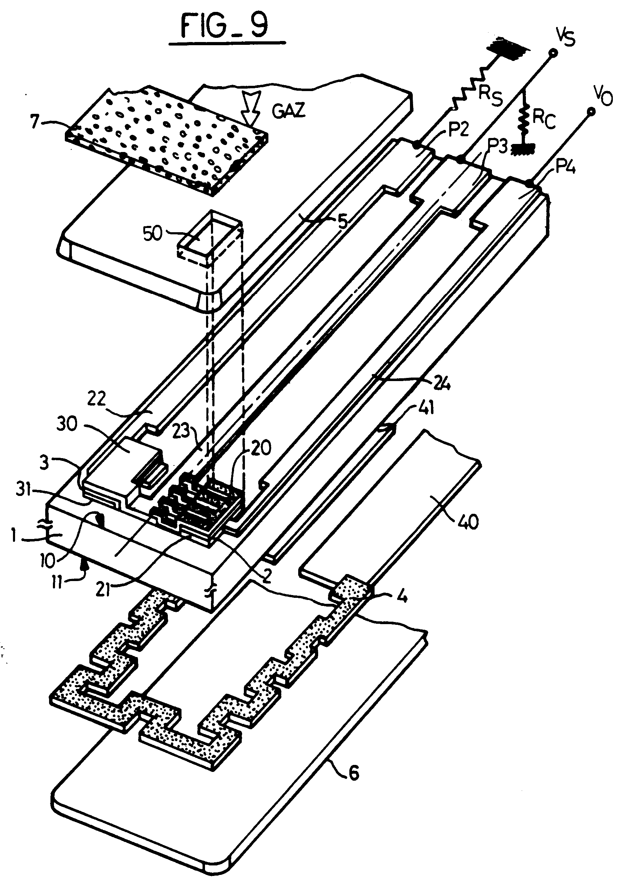

Selon une variante de réalisation de la structure de l'invention, représentée en figure 9, on peut déposer sur l'électrode supérieure de l'élément sensible un matériau céramique poreux 7 ($Al_2O_3$, Mg $Al_2O_4$, $ZrO_2$) déposé par sérigraphie ou à la torche plasma, qui aura pour effet de limiter le flux de gaz arrivant sur l'élément sensible 2 et d'augmenter son activité catalytique donc de diminuer le temps de réponse de mise à l'équilibre.

De plus l'élément sensible 2 peut aussi être imprégné à l'aide d'une solution d'acide choroplatinique, toujours pour augmenter l'activité catalytique et, corrélativement, diminuer le temps de réponse.

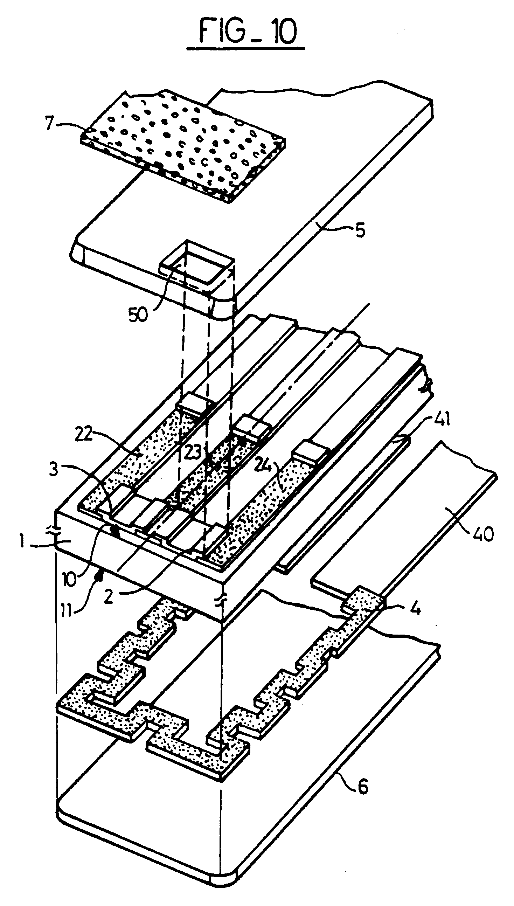

Selon une autre variante, au niveau structure on peut utiliser des électrodes "planar" comme représentées sur la figure 10.

L'élément sensible 2 et la thermistance 3, sont réalisées en technique planar de la même façon et chevauchent les pistes de connexion 23-24 pour l'élément sensible 2 et, 22-23 pour la thermistance 3.

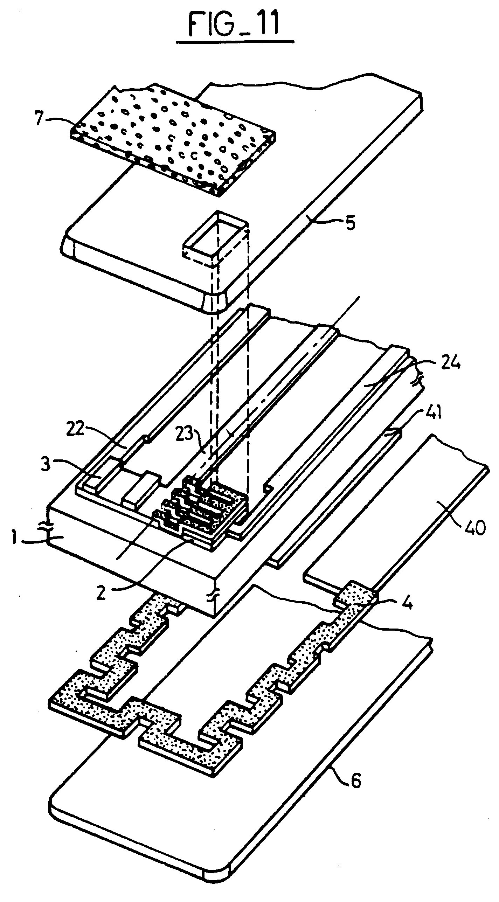

On peut également, comme cela est représenté en figure 11, réaliser le capteur selon l'invention sous forme d'une combinaison d'électrodes planar et d'électrodes superposées pour avoir un déséquilibre entre les valeurs des résistances de l'élément sensible et de la thermistance et augmenter la dynamique de $V_s$ en pourcentage de $V_o$. L'élément sensible 2 a alors la structure de l'élément sensible de la figure 4 tandis que la thermistance 3 a la structure de la thermistance de la figure 10. Il est bien évident d'autre part que l'inverse est possible, et que l'on peut donner à l'élément sensible 2 la configuration qu'il a sur la figure 10 et à la thermistance la configuration qu'elle présente sur la figure 4. Ainsi, en choisissant les géométries de telle sorte que $R_2$ (correspondant à la thermistance 3) sur le pont diviseur de la figure 2 soit de l'ordre de 10 $K\Omega$ à 600°C par exemple et $R_1$ (correspondant à la valeur de l'élément sensible 2) de l'ordre de 100 $\Omega$ lorsque le mélange bascule coté riche, et de l'ordre de 1 $M\Omega$ lorsque le mélange bascule coté pauvre, (toujours à 600°C), on obtient pour $V_S$ une variation entre 0,99 $V_o$ et $10^{-2}$ $V_o$ au passage par la stoechiométrie.

Un tel capteur selon l'invention présente des avantages de fabrication en raison de sa structure intégrée sous couches étanches d'encapsulation. Il est de plus facile à monter et à utiliser.

Il possède à la fois une thermistance de compensation et une résistance chauffante. Le fait d'avoir une résistance chauffante 4 permet de maintenir l'élément sensible à une température toujours supérieure ou égale à 500°C et donc, les réactions de mise à l'équilibre des gaz sont plus rapides et on a donc un temps de réponse plus faible.

L'encapsulation de la thermistance série représente une originalité, en ce sens que cela permet d'utiliser la même granulométrie de matériau et d'effectuer les mêmes traitements thermiques sur l'élément sensible et la thermistance sans prendre de précautions particulières pour rendre la thermistance plus dense.

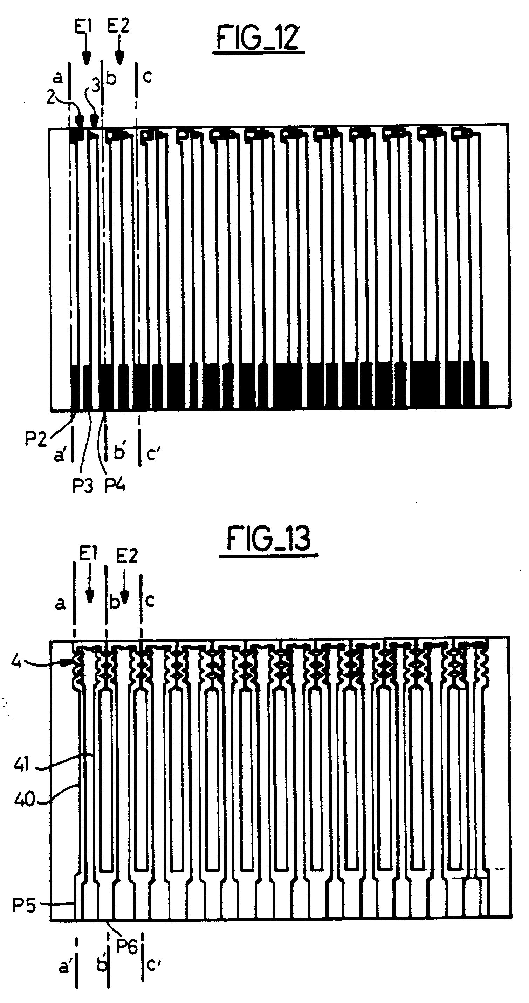

Les figures 12 et 13, représentent un mode de réalisation collectif des barrettes portant les éléments sensibles.

Sur une même plaquette de substrat sont réalisées, côte à côte, plusieurs cellules E1, E2. Comme représenté en figure 12, on obtient ainsi plusieurs cellules régulièrement espacées telle que E1, chacune d'elles possédant sur une face son élément sensible 2, sa thermistance 3, ses pistes de connexion 22, 23, 24 et ses plages de connexion P2, P3, P4.

La figure 13, représente la face opposée de la plaquette portant les éléments sensibles et les thermistances. Sur cette face on trouve des résistances, telle que situées dans des zones correspondant chacune à une cellule telle que E1, ainsi que les conducteurs de 40, 41 et des plages de connexion P5, P6.

La plaquette est découpée selon des lignes représentées par les traits mixtes aa', bb', cc' de façon à obtenir un capteur portant, sur une face, une cellule et les connexions correspondantes et, sur l'autre face, une résistance 4 et les connexions correspondantes.

Tous les capteurs obtenus sont identiques.

A titre d'exemple, les matériaux utilisés pour la réalisation d'un tel capteur pourront être :
- pour l'élément sensible : un matériau à base d'oxyde de titane ;

- pour les électrodes : un matériau cermet (alliage céramique/métal) ;
- pour les éléments de connexions et conducteurs : des couches métalliques ;
- pour les couches d'encapsulation et le matériau assurant une étanchéïté entre la pièce de fixation MF et la plaquette du capteur : un émail réfractaire de scellement.
- pour le substrat un matériau tel que l'alumine avec un pourcentage de cette dernière compris entre 80 et 99%.

Dans le cas d'une réalisation collective de plusieurs capteurs sur une même plaquette, le procédé de l'invention prévoit, après recuit de l'émail, de découper la plaquette pour obtenir les différents capteurs individuels sous forme de barrettes.

La pièce de fixation et de support MF doit être en matériau accordé en dilatation au matériau du substrat 1. Par exemple, si le substrat est en alumine, la pièce MF sera de préférence en alumine également. De même, le ciment de scellement MF4 sera en matériau accordé en dilatation aux matériaux de la pièce MF et du substrat 1.

Il est bien évident que la description qui précède n'a été faite qu'à titre d'exemple non limitatif et que d'autres variantes peuvent être envisagées sans sortir du cadre de l'invention.

Notamment le substrat 1 portant l'élément sensible 2 et la thermistance 3 a été réalisé sous la forme d'une plaquette, mais il pourrait avoir une toute autre forme.

L'important est que la thermistance 3 subisse les mêmes variations de température que l'élément sensible 2 et soit éventuellement couplée thermiquement à l'élément sensible 2.

Les exemples numériques et les choix des matériaux notamment n'ont été fournis que pour illustrer la description.

## Revendications

1. Capteur de type résistif de mesure de concentrations relatives d'espèces réactives fluides, comportant, réalisés en couches minces ou épaisses sur un substrat 1 :
   - au moins un élément sensible (2) dont la résistivité est sensible à un excès de l'une des espèces réactives par rapport à une stoechiométrie déterminée ;
   - au moins une thermistance (R2, 3) montée en pont diviseur de tension avec la résistance formée par l'élément sensible (2) et réalisant une compensation en température pour le capteur ;
   caractérisé en ce que la structure de l'élément sensible (2) est poreuse tandis que celle de la thermistance (R2, 3) est dense.

2. Capteur selon la revendication 1, caractérisé en ce que la thermistance (3) est en matériau tel qu'une variation de température a un effet sensiblement équivalent sur l'élément sensible (2) et sur la thermistance (3).

3. Capteur selon la revendication 2, caractérisé en ce que la thermistance (3) est réalisée en un même matériau que l'élément sensible (2).

4. Capteur selon la revendication 1, caractérisé en ce qu'il comporte une résistance de chauffage (4) dont la fonction est d'imposer une température minimale de fonctionnement à l'élément sensible.

5. Capteur selon la revendication 1, caractérisé en ce que la thermistance (3) est couplée thermiquement à l'élément sensible (2).

6. Capteur selon la revendication 1, caractérisé en ce que la thermistance (3) est placée à proximité de l'élément sensible (2).

7. Capteur selon la revendication 1, caractérisé en ce que la thermistance (3) est en un même matériau que l'élément sensible (2) et est isolé des espèces réactives fluides à analyser.

8. Capteur selon la revendication 1, caractérisé en ce que l'élément sensible (2) est réalisé sous forme d'une couche comprise entre deux électrodes (20, 21), l'électrode (20) située du côté de l'arrivée des espèces réactives fluides à analyser possédant des ouvertures.

9. Capteur selon la revendication 1, caractérisé en ce que la thermistance (3) est réalisé sous forme d'une couche située entre deux électrodes de connexion (30, 31).

10. Capteur selon la revendication 1, caractérisé en ce que la thermistance (3) et l'élément sensible (2) sont réalisés en technologie planar.

11. Capteur selon la revendication 1, caractérisé en ce qu'il comprend :
    - un substrat (1) de forme allongée comportant, disposées dans le sens de la longueur, une première zone de détection, une deuxième zone support et de fixation du capteur, une troisième zone de connexion électrique ;
    - au moins un élément sensible (2) dont un au moins est sensible à un excès de l'une des espèces réactives par rapport à une stoechimétrie déterminée, cet élément étant implanté directement dans la première zone du substrat (1) ;
- au moins une thermistance (3) et au moins une résistance (4) implantées également dans la première zone du substrat ;
- des plages de connexions électriques (P2, P3, P4), situées dans la troisième zone de connexion électrique ;
- des pistes conductrices de connexions électriques (22, 23, 24, 40, 4) déposées sur le substrat (1) et connectant la ou les éléments sensibles (2), la thermistance (3) et la résistance (4) aux plages de connexions électriques (P2, P3, P4) situées dans la zone de connexion électrique ;
- une couche d'encapsulation (5, 6) d'un matériau étanche audit mélange de gaz recouvrant au moins les première et deuxième zones, encapsulant notamment l'élément sensible (2), la thermistance (3) et les pistes de connexion et possédant au moins une ouverture d'accès (50) des gaz (G) vers l'élément sensible (2) ;
- une pièce de fixation (MF) située dans la deuxième zone de fixation et interdisant le passage du fluide de la première zone vers la troisième zone.

12. Capteur selon la revendication 11, caractérisé en ce que la pièce de fixation (MF) est fixée de manière étanche au capteur.

13. Capteur selon la revendication 11, caractérisé en ce que la pièce de fixation (MF possède des moyens de montage (MFO) permettant la fixation du capteur dans une paroi d'un carter (CA) de telle façon que l'élément sensible soit situé à l'intérieur du carter (CA) contenant le mélange gazeux à analyser et que la paroi du carter associée à la pièce de fixation MF interdise le passage du mélange gazeux vers la zone de connexion.

14. Capteur selon la revendication 11, caractérisé en ce qu'il comporte un connecteur femelle (CE) monté sur la troisième zone de connexion électrique et possédant des broches de connexion (B2 à B6) mises en contact avec lesdites plages de connexion (P2, P3...).

15. Capteur selon la revendication 11, caractérisé en ce que le substrat (1) et la pièce de fixation (MF) sont en matériaux accordés en dilatation.

16. Capteur selon la revendication 11, caractérisé en ce que le substrat (1) et la pièce de fixation (MF) sont en alumine.

17. Capteur selon la revendication 11, caractérisé en ce que la barrette portant l'élément sensible (2) est scellée dans la pièce de fixation (MF) à l'aide d'un ciment dont le matériau est accordé en dilatation au matériau du substrat (1) et au matériau de la pièce de fixation (MF).

18. Capteur selon la revendication 11, caractérisé en ce qu'il comporte une pièce de montage (R) dans laquelle est montée la pièce de fixation (MF) avec l'élément sensible (2) logé dans la pièce de montage, celle-ci possédant en outre une partie filetée permettant une fixation dans un carter (CA) et des ailettes de refroidissement.

19. Capteur selon la revendication 4, caractérisé en ce que ledit élément (2) sensible à un excès de l'une des espèces réactives ainsi que la thermistance (3) sont implantés sur une face (10) du substrat (1) et que sur la face opposée (11) du substrat (1) est implantée une résistance de chauffage (4) en vis-à-vis de la cellule (2) et notamment en vis-à-vis de la zone d'accès des gaz (50).

20. Procédé de fabrication d'un capteur selon la revendication 11, caractérisé en ce que plusieurs capteurs sont réalisés collectivement sur une même plaque de substrat puis sont découpés pour obtenir des capteurs individuels.

21. Procédé de fabrication d'un capteur selon la revendication 1, caractérisé en ce que l'élément (2) est imprégné à l'aide d'une solution d'acide chloroplatinique, le platine restant, après traitement thermique, sous forme extrêmement divisée.

## Patentansprüche

1. Resistive Sonde zur Messung von relativen Konzentrationen von reaktiven Fluidstoffen, wobei die Sonde auf einem Substrat (1) folgende dünne oder dicke Schichten enthält:
- mindestens ein empfindliches Element (2), dessen Widerstandswert auf einen Überschuß eines der reaktiven Stoffe bezüglich einer bestimmten Stöchiometrie anspricht,
- mindestens einen temperaturabhängigen Widerstand (R2, 3), der in einer Spannungsteilerschaltung mit dem durch das empfindliche Element (2) gebildeten Widerstand geschaltet ist und eine Temperaturkompensation für die Sonde bildet, dadurch gekennzeichnet, daß die Struktur des empfindlichen Elements (2) porös ist, während die des temperaturabhängigen Widerstands (R2, 3) dicht ist.

2. Sonde nach Anspruch 1, dadurch gekennzeichnet, daß der temperaturabhängige Widerstand (3) aus einem Material besteht, das bei einer Temperaturveränderung eine im wesentlichen gleiche Wirkung auf das empfindliche Element (2) wie auf den temperaturabhängigen Widerstand (3) besitzt.

3. Sonde nach Anspruch 2, dadurch gekennzeichnet, daß der temperaturabhängige Widerstand aus demselben Material wie das empfindliche Element (2) besteht.

4. Sonde nach Anspruch 1, dadurch gekennzeichnet, daß sie einen Heizwiderstand (4) aufweist, der die Aufgabe hat, das empfindliche Element auf eine Mindestbetriebstemperatur zu bringen.

5. Sonde nach Anspruch 1, dadurch gekennzeichnet, daß der temperaturabhängige Widerstand (3) thermisch mit dem empfindlichen Element (2) gekoppelt ist.

6. Sonde nach Anspruch 1, dadurch gekennzeichnet, daß der temperaturabhängige Widerstand (3) in der Nähe des empfindlichen Elements (2) angeordnet ist.

7. Sonde nach Anspruch 1, dadurch gekennzeichnet, daß der temperaturabhängige Widerstand (3) aus demselben Material wie das empfindliche Element (2) besteht und gegen die zu analysierenden reaktiven Fluidstoffe isoliert ist.

8. Sonde nach Anspruch 1, dadurch gekennzeichnet, daß das empfindliche Element (2) aus einer Schicht zwischen zwei Elektroden (20, 21) besteht, wobei die Elektrode (20), die auf der Seite des Einlasses der zu analysierenden reaktiven Fluidstoffe liegt, Öffnungen besitzt.

9. Sonde nach Anspruch 1, dadurch gekennzeichnet, daß der temperaturabhängige Widerstand (3) aus einer zwischen zwei Anschlußelektroden (30, 31) liegenden Schicht besteht.

10. Sonde nach Anspruch 1, dadurch gekennzeichnet, daß der temperaturabhängige Widerstand (3) und das empfindliche Element (2) in Planartechnologie hergestellt sind.

11. Sonde nach Anspruch 1, dadurch gekennzeichnet, daß sie aufweist:
    - ein längliches Substrat (1), das in Richtung seiner Länge eine erste Detektorzone, eine zweite Zone zum Tragen und Befestigen der Sonde und eine dritte Zone für elektrische Anschlüsse aufweist,

- mindestens ein empfindliches Element (2), von denen mindestens eines auf einen Überschuß eines der reaktiven Stoffe bezüglich einer gegebenen Stöchiometrie anspricht, wobei dieses Element unmittelbar in der ersten Zone des Substrats (1) implantiert ist,
- mindestens einen temperaturabhängigen Widerstand (3) und mindestens einen Widerstand (4), die ebenfalls in der ersten Zone des Substrats implantiert sind,
- elektrische Anschlußbereiche (P2, P3, P4), die in der dritten, der elektrischen Anschlußzone liegen,
- Leitbahnen für elektrische Anschlüsse (22, 23, 24, 40, 4) auf dem Substrat (1), die das oder die empfindlichen Elemente (2), den temperaturabhängigen Widerstand (3) und den Widerstand (4) mit den elektrischen Anschlußbereichen (P2, P3, P4) in der elektrischen Anschlußzone verbinden,
- eine Einkapselungsschicht (5, 6) aus einem für die Gasmischung dichten Material, die mindestens die erste und die zweite Zone bedeckt und insbesondere das empfindliche Element (2), den temperaturabhängigen Widerstand (3) und die Anschlußbahnen bedeckt sowie mindestens eine Öffnung (50) für den Zutritt der Gase (G) zum empfindlichen Element (2) besitzt,
- ein Befestigungsteil (MF), das in der zweiten, der Befestigungszone, liegt, und den Durchgang des Fluids von der ersten Zone zur dritten Zone verhindert.

12. Sonde nach Anspruch 11, dadurch gekennzeichnet, daß das Befestigungsteil (MF) dicht auf der Sonde befestigt ist.

13. Sonde nach Anspruch 11, dadurch gekennzeichnet, daß das Befestigungsteil (MF) Montagemittel (MFO) besitzt, mit denen die Sonde in einer Wand eines Gehäuses (CA) so befestigt werden kann, daß das empfindliche Element im Inneren des das zu analysierende Gasgemisch enthaltenden Gehäuses (CA) liegt und daß die dem Befestigungsteil (MF) zugeordnete Gehäusewand den Durchgang des Gasgemisches zur Anschlußzone verhindert.

14. Sonde nach Anspruch 11, dadurch gekennzeichnet, daß sie das Buchsenteil eines Steckers (CE) enthält, das in der dritten, der elektrischen Anschlußzone, montiert ist und Anschlußbuchsen (B2 bis B6) besitzt, die mit den Anschlußbereichen (P2, P3, ...) in Kontakt gebracht werden.

15. Sonde nach Anspruch 11, dadurch gekennzeichnet, daß das Substrat (1) und das Befestigungsteil (MF) aus in Hinblick auf die Ausdehnung angepaßten Materialien bestehen.

16. Sonde nach Anspruch 11, dadurch gekennzeichnet, daß das Substrat (1) und das Befestigungsteil (MF) aus Aluminiumoxid sind.

17. Sonde nach Anspruch 11, dadurch gekennzeichnet, daß die das empfindliche Element (2) tragende Leiste im Befestigungsteil (MF) mit Hilfe eines Zements verankert ist, dessen Material in Hinblick auf die Ausdehnung auf das Material des Substrats (1) und das des Befestigungsteils (MF) abgestimmt ist.

18. Sonde nach Anspruch 11, dadurch gekennzeichnet, daß sie ein Montageteil (R) aufweist, in dem das Befestigungsteil (MF) mit dem im Montageteil untergebrachten empfindlichen Element (2) montiert ist, wobei das Montageteil weiter einen mit Gewinde versehenen Bereich, mit dem es in einem Gehäuse (CA) befestigt werden kann, und Kühlrippen besitzt.

19. Sonde nach Anspruch 4, dadurch gekennzeichnet, daß das für einen Überschuß eines der reaktiven Stoffe empfindliche Element sowie der temperaturabhängige Widerstand (3) auf einer Seite (10) des Substrats (1) implantiert sind und daß auf der Gegenseite (11) des Substrats (1) ein Heizwiderstand (4) gegenüber dem Element (2) und insbesondere gegenüber der Gaszutrittsöffnung (50) implantiert ist.

20. Verfahren zur Herstellung einer Sonde nach Anspruch 11, dadurch gekennzeichnet, daß mehrere Sonden kollektiv auf einem gemeinsamen Substratplättchen hergestellt werden und dann das Substrat zur Ausbildung von einzelnen Sonden zerschnitten wird.

21. Verfahren zur Herstellung einer Sonde nach Anspruch 1, dadurch gekennzeichnet, daß das Element (2) mit einer Chlor-Platinsäure imprägniert wird, wobei das Platin nach einer Wärmebehandlung in stark unterteilter Form verbleibt.

**Claims**

1. Sensor of the resistive type for the measurement of relative concentrations of fluid reactive species, comprising, formed in thin or thick layers on a substrate (1):
   - at least one sensing element (2) of which the resistivity is sensitive to an excess of one of the reactive species in relation to a given stoichiometry;
   - at least one thermistor (R2, 3 ) mounted as a voltage divider bridge with the resistance formed by the sensing element (2) and forming temperature compensating means for the sensor;
   characterised in that the structure of the sensing element (2) is porous, while that of the thermistor (R2, 3) is dense.

2. Sensor according to claim 1, characterised in that the thermistor (3) is made of a material such that a variation in temperature has a substantially equivalent effect on the sensing element (2) and on the thermistor (3).

3. Sensor according to claim 2, characterised in that the thermistor (3) is made of the same material as the sensing element (2).

4. Sensor according to claim 1, characterised in that it comprises a heating resistor (4) of which the function is to impose a minimum operating temperature on the sensing element.

5. Sensor according to claim 1, characterised in that the thermistor (3) is thermally coupled to the sensing element (2).

6. Sensor according to claim 1, characterised in that the thermistor (3) is placed in the proximity of the sensing element (2).

7. Sensor according to claim 1, characterised in that the thermistor (3) is made of the same material as the sensing element (2) and is insulated from the fluid reactive species to be analysed.

8. Sensor according to claim 1, characterised in that the sensing element (2) is made in the form of a layer between two electrodes (20, 21), wherein the electrode (20) situated on the side of inflow of the fluid reactive species to be analysed has openings.

9. Sensor according to claim 1, characterised in that the thermistor (3) is made in the form of a layer situated between two connecting electrodes (30, 31).

10. Sensor according to claim 1, characterised in that the thermistor (3) and the sensing element (2) are made by planar technology.

11. Sensor according to claim 1, characterised in that it includes:
    - a substrate (1) of elongate shape comprising, arranged in the direction of the length, a first detection zone, a second sensor support and fixing zone, and a third electrical connection zone;
- at least one sensing element (2) of which at least one is sensitive to an excess of one of the reactive species in relation to a given stoichiometry, this element being implanted directly in the first zone of the substrate(1);
- at least one thermistor (3) and at least one resistor (4) also implanted in the first zone of the substrate;
- regions of electrical connections (P2, P3, P4) situated in the third electrical connection zone;
- conductive tracks for electrical connections (22, 23, 24, 40, 4) deposited on the substrate (1) and connecting the sensing element or elements (2), the thermistor (3) and the resistor (4) to the regions of electrical connections (P2, P3, P4) situated in the electrical connection zone;
- an encapsulating layer (5, 6) of a material impermeable to said gas mixture covering at least the first and second zones, encapsulating in particular the sensing element (2), the thermistor (3) and the connecting tracks and having at least one opening (50) for access of the gases (G) to the sensing element (2);
- a fixing piece (MF) situated in the second fixing zone and preventing passage of the fluid from the first zone to the third zone.

12. Sensor according to claim 11, characterised in that the fixing piece (MF) is fixed sealingly to the sensor.

13. Sensor according to claim 11, characterised in that the fixing piece (MF) has mounting means (MFO) allowing the sensor to be fixed in a wall of a housing (CA) in such a way that the sensing element is situated inside the housing (CA) containing the gas mixture to be analysed and that the housing wall associated with the fixing piece (MF) prevents passage of the gas mixture to the connection zone.

14. Sensor according to claim 11, characterised in that it comprises a female connector (CE) mounted on the third electrical connection zone and having connecting pins (B2 to B6) contacting said connecting regions (P2,P3,...).

15. Sensor according to claim 11, characterised in that the substrate (1) and the fixing piece (MF) are made of materials which are matched in expansion.

16. Sensor according to claim 11, characterised in that the substrate (1) and the fixing piece (MF) are made of aluminium.

17. Sensor according to claim 11, characterised in that the bar carrying the sensing element (2) is sealed into the fixing piece (MF) by means of a cement of which the material is matched in expansion with the material of the substrate (1) and with the material of the fixing piece (MF).

18. Sensor according to claim 11, characterised in that it comprises a mounting piece (R) in which is mounted the fixing piece (MF) with the sensing element (2) accommodated in the mounting piece, the latter further having a threaded portion allowing fixing in a housing (CA) and cooling fins.

19. Sensor according to claim 4, characterised in that said sensing element (2) which is sensitive to an excess of one of the reactive species as well as the thermistor (3) are implanted on one face (10) of the substrate (1) and in that on the opposite face (11) of the substrate (1) is located a heating resistor (4) opposite the cell (2) and particularly opposite the gas access zone (50).

20. Method for the manufacture of a sensor according to claim 11, characterised in that several sensors are produced collectively on the same substrate plate, then cut out to obtain individual sensors.

21. Method for the manufacture of a sensor according to claim 1, characterised in that the element (2) is impregnated with a chloroplatinic acid solution, the platinum remaining, after heat treatment, in extremely divided form.

# FIG_1

## FIG_2

## FIG_3

# FIG_4

FIG_5

FIG_6

FIG_7

EP 0 364 315 B1

EP 0 364 315 B1

# FIG_8

# FIG_9

# FIG_10

# FIG_11

## FIG_12

## FIG_13